(19) Europäisches Patentamt
European Patent Office
Office européen des brevets

(11) Veröffentlichungsnummer: **0 179 737**
**B1**

(12) # EUROPÄISCHE PATENTSCHRIFT

(45) Veröffentlichungstag der Patentschrift: **08.06.88**

(51) Int. Cl.⁴: **C 09 D 11/10,** D 06 P 5/00, B 41 M 5/035

(21) Anmeldenummer: **85810415.1**

(22) Anmeldetag: **13.09.85**

(54) **Wässrige Drucktinte für den Transferdruck.**

(30) Priorität: **19.09.84 CH 4478/84**

(43) Veröffentlichungstag der Anmeldung: **30.04.86 Patentblatt 86/18**

(45) Bekanntmachung des Hinweises auf die Patenterteilung: **08.06.88 Patentblatt 88/23**

(84) Benannte Vertragsstaaten: **CH DE FR GB IT LI NL**

(56) Entgegenhaltungen:
**EP-A-0 096 806**
**EP-A-0 100 808**
**DE-B-2 557 002**
**FR-A-2 248 307**
**GB-A-2 001 089**

(73) Patentinhaber: **CIBA- GEIGY AG, Klybeckstrasse 141, CH- 4002 Basel (CH)**

(72) Erfinder: **Défago, Raymond, Bäumlihofstrasse 421, CH- 4125 Riehen (CH)**
Erfinder: **Bäuerle, Rolf, Im Hirshalm 9, CH- 4125 Riehen (CH)**

**EP 0 179 737 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft eine wässrige Drucktinte für den Transferdruck und deren Verwendung zum Bedrucken von Transferdruckpapier auf Tiefdruckmaschinen.

Gerade für Polyesterfasermaterialien ist der Transferdruck in den letzten Jahren zu einem wichtigen Druckverfahren geworden. Als Zwischenträger dient vorwiegend Papier, das nach verschiedenen Verfahren bedruckt wird, wobei dem Tiefdruck wegen der guten Druckqualität eine besondere Bedeutung zukommt. Im Tiefdruck werden bisher vor allem Druckfarben eingesetzt, die organische Lösungsmittel, wie z. B. Alkohole, Ethylacetat oder Methylethylketon enthalten. Für den Textildrucker, der gewöhnt ist, mit Druckfarben auf wässriger Basis zu arbeiten, bedeutet dies eine erhebliche Umstellung, da die von ihm verwendeten Druckmaschinen häufig nicht explosionsgeschützt und oft auch keine Einrichtungen vorhanden sind, um grosse Mengen an organischen Lösungsmitteln sicher zu lagern. Man bemüht sich daher schon seit einiger Zeit, mit wässrigen Druckfarben zu arbeiten, zumal das bei der Trocknung verdampfende Wasser nicht wie die organischen Lösungsmittel aus ökologischen Gründen aus der Trockenluft entfernt werden muss.

Bei der Umstellung auf wässrige Druckfarben bzw. Drucktinten treten jedoch eine Reihe von Schwierigkeiten auf. Ein Hauptproblem ist die Trockengeschwindigkeit des bedruckten Transferdruckpapiers. Gefordert wird eine Druckfarbe die nicht nur gute rheologische Eigenschaften hat, sondern auch möglichst rasch trocknet, so dass auf den kontinuierlich laufenden Druckmaschinen hinreichend hohe Druckgeschwindigkeiten eingestellt werden können.

Bekannte wässrige Druckfarben, die natürliche Verdickungsmittel enthalten, wie z. B. Alginate, sind für die Anwendung auf Tiefdruckmaschinen weniger geeignet, da der Trocknungsprozess zu langsam verläuft und nicht in allen Fällen egale Drucke erhalten werden.

Aus der GB-A-2 001 089 sind Tinten für Transfer bekannt, die Acrylsäure/ Styrol-Mischpolymerisate und als Verdicker Polyacrylsäure mit einem Molekulargewicht < 100'000 enthalten, wobei insbesondere auch Harnstoff darin vorhanden ist.

Gefunden wurde nun eine wässrige Drucktinte, die eine polymere Acrylsäure un/oder ein Acrylsäure/Styrol-Mischpolymerisat als Bindemittel in Kombination mit einer hochmolekularen Polyacrylsäure oder Hydroxyethylcellulose als Verdickungsmittel enthält. Eine solche Tinte trocknet rasch und lässt sich sowohl auf Maschinen mit Zwischentrocknung, als auch im Nass-in-Nass-Druck anwenden. Man erhält einen homogenen Flächendruck mit einwandfreier Konturenschärfe.

Gegenstand der vorliegenden Erfindung ist somit eine wässrige Transferdrucktinte, die mindestens einen für den Transferdruck geeigneten sublimierbaren Farbstoff, mindestens ein Bindemittel, mindestens ein Verdickungsmittel und gegebenenfalls weitere Zusätze enthält, dadurch gekennzeichnet, dass das Verdickungsmittel

Hydroxyethylcellulose oder Polyacrylsäure mit einem Molekulargewicht von 3 bis $10 \cdot 10^6$ und das Bindemittel

ein Polymerisat oder Mischpolymerisat aus Acrylsäure, Methacrylsäure oder deren Salzen oder $C_1$-$C_4$-Alkylestern oder

ein Acrylsäure/Methacrylsäure-Styrolmischpolymerisat oder ein Acryl-oder Methacrylsäure-$C_1$-$C_4$-alkylester-Styrolmischpolymerisat sind, wobei das Molekulargewicht des Bindemittels im Bereich von 10'000 bis 1'000'000 liegt.

Die für den Transferdruck geeigneten Farbstoffe sind bekannt. Es handelt sich hierbei vorzugsweise um in Wasser unlösliche bis schwerlösliche Farbstoffe, insbesondere Dispersionsfarbstoffe, welche bei atmosphärischem Druck zwischen 150 und 220° C zu mindestens 60 % in weniger als 60 Sekunden in den Dampfzustand übergehen, hitzestabil und unzersetzt transferierbar sind. Die Farbstoffe können auch als Farbstoffpräparationen zur Herstellung der Drucktinten eingesetzt werden. Solche Farbstoffpräparationen sind z. B. aus der DE-A 2 850 482 oder DE-A 2 520 527 bekannt.

Anstelle der Farbstoffe können auch geeignete optische Aufheller eingesetzt werden.

Als weitere Zusätze kann die Drucktinte beispielsweise noch Antischaummittel, z. B. auf Basis von 2-Ethyl-n-hexanol und gegebenenfalls pH-Wert regulierende Komponenten, wie z. B. Ammoniak, Alkanolamine, etwa Triethanolamin oder auch Natrium- bzw. Kaliumhydroxid enthalten. Der pH-Wert der Tinte liegt zweckmässigerweise im Bereich von 6 bis 9, insbesondere von 7 bis 8,5.

Erfindungswesentlich ist die Kombination aus einem spezifischen Bindemittel, nämlich einer polymeren Acrylsäure oder einem Acrylsäure/Styrol-Mischpolymerisat, die auch im Gemisch eingesetzt werden können, und einem definitionsgemässen synthetischen Verdicker. Bindemittel und Verdicker werden vorteilhaft in einer Konzentration von 3 bis 10 Gew.-% (Aktivsubstanz) bezogen auf die fertige Formulierung in die Tinte eingearbeitet, wobei das Bindemittel allgemein im Ueberschuss eingesetzt wird. Für die beiden Komponenten Verdicker und Bindemittel erweist sich ein Gewichtsverhältnis von 1 : 10 bis 1 : 70 als zweckmässig.

Bei den synthetischen Verdickern handelt es sich in erster Linie um hochmolekulare Polyacrylsäuren mit einem Molgewicht von 3 bis $10 \cdot 10^6$, vorzugsweise 3 bis $6 \cdot 10^6$, und um Hydroxyethylcellulose. Als Hydroxyethylcellulose, die auch den halbsynthetischen Verdickern zugerechnet wird,

kommt erfindungsgemäss insbesondere eine solche mit einem Molgewicht von 40.000 bis 200.000 in Betracht. Besonders gute Ergebnisse werden mit einer Hydroxyethylcellulose erhalten, deren Substitutionsgrad bei 2 bis 4 liegt. Der Substitutionsgrad bezeichnet die mittlere Anzahl Mole Ethylenoxid, die je Glucoseeinheit reagiert haben. Besonders bevorzugter Verdicker ist durch Divinylbenzol vernetzte Polyacrylsäure mit einem Molgewicht von 3 bis $5 \cdot 10^6$. Auch Mischungen aus den genannten hochmolekularen Polyacrylsäuren und Hydroxyethylcellulose sind geeignet.

Als Bindemittel werden in der erfindungsgemässen Drucktinte eine polymere Acrylsäure mittleren Molgewichts oder ein Acrylsäure/Styrol-Mischpolymerisat verwendet. Bei diesen filmbildenden Polymeren, die den bedruckten Transferpapieren die nötige Scheuerfestigkeit verleihen und ein Wegschlagen des Farbstoffs beim Aufbringen der Drucktinte wirksam verhindern, handelt es sich um solche Verbindungen, deren Molgewicht über 10.000 und zwar im Bereich von 10.000 bis ca. 1.000.000 liegt. Verwendet werden insbesondere solche polymeren Acrylsäuren mit einem Molgewicht von 10.000 bis 25.000. Unter dem Begriff polymere Acrylsäure werden im vorliegenden Fall sowohl Polymerisate aus Acrylsäure/Methacrylsäure oder deren Salzen, wie z. B. der Alkali- und Ammoniumsalze oder auch aus Acrylsäureestern verstanden, wobei sich der Alkoholteil derartiger Ester von niederaliphatischen gesättigten Alkoholen, z. B. $C_1$-$C_4$-Alkanolen und insbesondere Methanol oder Ethanol ableitet. In Frage kommen natürlich auch Mischpolymerisate verschiedener Acrylsäureester, beispielsweise solche, aus Acrylsäuremethyl- und -ethylester z. B. in einem Molverhältnis von ca. 1 : 1.

Der Ausdruck Acrylsäure/Styrol-Mischpolymerisate bezeichnet ein Copolymer aus Acrylsäure/Methacrylsäure und Styrol, wobei die Acrylsäure hier ebenfalls ganz oder teilweise durch Acrylsäureester ersetzt sein kann. Auch hier kommen wieder Acrylsäureester niederaliphatischer gesättigter Alkohole (z. B. $C_1$-$C_4$ Alkanole) in Betracht. Bevorzugt zur Anwendung gelangen solche Mischpolymerisate, die ca. 20 Gew.-% Acrylsäure/Methacrylsäure bzw. deren Ester und 80 Gew.-% Styrol enthalten. Auch Mischpolymerisate aus einem Gemisch von (Meth)acrylsäure und deren Estern oder von verschiedenen Estern, z. B. Ethylacrylat und Methylmethacrylat, mit Styrol sind geeignet. Die polymere Acrylsäure wird zweckmässigerweise als wässrige oder wässrig/alkoholische Lösung eingesetzt und das Acrylsäure/Styrol-Mischpolymerisat als wässrige Emulsion.

Die erfindungsgemässe Drucktinte ist niederviskos, wobei sich die Viskosität der einmal angesetzten Tinte auch über einen längeren Zeitraum praktisch kaum ändert. Die Viskositätswerte liegen vorteilhaft im Bereich von etwa 15 bis 20 s Auslaufzeit (Ford Becher 4, DIN 53211). Enthält die Tinte zusätzlich noch geringe Mengen eines organischen Lösungsmittels, so ist darauf zu achten, dass deren Flammpunkt nicht < 50° C ist.

Der Transferdruck wird in der üblichen Weise mittels einer Transferpresse durchgeführt. Hierzu wird der bedruckte Zwischenträger mit dem zu bedruckenden Substrat in Kontakt gebracht und so lange auf etwa 150 bis 220° C gehalten, bis die auf dem Zwischenträger aufgebrachten Farbstoffe auf das Substrat übertragen sind; dazu genügen in der Regel 5 bis 60 Sekunden. Das bedruckte Material wird vom Zwischenträger getrennt, eine Nachbehandlung ist im allgemeinen nicht erforderlich.

Als Zwischenträger kommen in erster Linie die bekannten, für den Transferdruck geeigneten Papiere mit einem Gewicht von 60 bis 80 $g/m^2$, daneben aber auch beispielsweise Cellophan oder Metallfolien in Betracht. Ein wesentlicher Vorteil der erfindungsgemässen Drucktinte ist, dass mit dieser auch leichtere Transferpapiere bedruckt werden können, d.h. solche mit einem Gewicht von 40 bis 50 $g/m^2$.

Geeignete Transferdrucksubstrate sind vor allem textile Materialien, insbesondere flächenförmige Gebilde wie Vliese, Filze, Teppiche und insbesondere Gewebe und Gewirke aus synthetischen Fasern, vor allem aus Polyesterfasermaterialien. Natürlich kann die erfindungsgemässe Drucktinte unter Verwendung geeigneter Zwischenträger auch zum Bedrucken oder Dekorieren anderer Materialien, wie z. B. entsprechend vorbehandelter Blechdosen verwendet werden.

Die folgenden Beispiele erläutern die Erfindung Teile bedeuten Gewichtsteile und Prozente Gewichtsprozente.

Beispiel 1: Zu 800 g eines Verdünners der Zusammensetzung:

830 Teile Wasser,

10 Teile einer 15 %-igen wässrigen Emulsion von Polyacrylsäure, vernetzt mit Divinylbenzol, MG ca. $4.10^6$,

1,5 Teile Ammoniaklösung 30 %-ig,

150 Teile einer 48 %-igen wässrigen Emulsion eines Acrylsäure/Styrol-Mischpolymerisats,

10 Teile Antischaummittel (Hauptkomponente: 2-Aethyl-n-hexanol)

gibt man 200 g einer wässrigen Präparation, enthaltend 90 g des Farbstoffes der Formel

(1) 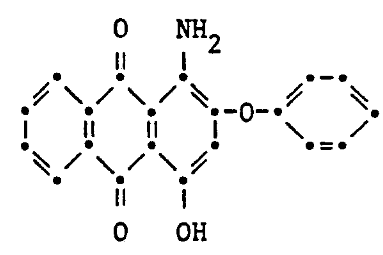

(Rest Wasser und die in Farbstoff-Flüssigformulierungen üblichen Zusätze). Man erhält so 1000 g einer Drucktinte, mit welcher man einen Zwischenträger aus Papier im

Tiefdruckverfahren bedruckt. Die Drucktinte hat eine Viskosität von 17 bis 18 s Auslaufzeit gemessen im Ford-Becher 4. Der Auftrag auf das Papier erfolgt stellenweise oder ganzflächig. Das bedruckte Papier wird getrocknet und ist jederzeit zum Bedrucken von synthetischen Fasermaterialien nach dem thermischen, trockenen Transferdruckverfahren einsetzbar. Zum Bedrucken des Fasermaterials z. B. aus Polyester wird das Transferpapier und ein Polyester-Gewebe während 30 Sekunden bei 210° C in einer Transferpresse zusammengepresst. Man erhält auf dem Gewebe egale und farbstarke rote Musterungen mit scharfen Konturen.

Beispiel 2: Man verfährt wie im Beispiel 1 angegeben, verwendet jedoch 800 g eines Verdünners der folgenden Zusammensetzung:

680 Teile Wasser

10 Teile einer 15 %-igen wässrigen Emulsion von Polyacrylsäure, vernetzt mit Divinylbenzol, MG ca. $4 \cdot 10^6$

1,5 Teile Ammoniaklösung 30 %-ig

300 Teile einer 24%-igen wässrigen Lösung einer Polyacrylsäure, MG 22.400

10 Teile Antischaummittel (Hauptkomponente: 2-Aethyl-n-hexanol).

Mit der so erhaltenen Drucktinte einer Viskosität von 17 bis 18 s Auslaufzeit (Ford-Becher 4) wird Papier im Tiefdruckverfahren bedruckt. Nach dem Transferieren des Farbstoffes vom Papier auf das Polyestergewebe mittels Transferdruckverfahren erhält man rote, intensive Musterungen mit scharfen Konturen.

Beispiel 3: Verfährt man wie im Beispiel 1 beschrieben, verwendet jedoch 800 g eines Verdünners der folgenden Zusammensetzung:

684 Teile Wasser

6 Teile Hydroxyäthylcellulose (Substitutionsgrad 2,5)

300 Teile einer 24%-igen wässrigen Lösung einer Polyacrylsäure, MG 22.400

10 Teile Antischaummittel (Hauptkomponente: 2-Aethyl-n-hexanol)

so erhält man ebenfalls eine rasch trocknende Drucktinte, die unter Verwendung eines Papierzwischenträgers im Transferdruck auf Polyester gleichfalls rote, intensive Musterungen mit scharfen Konturen ergibt. Die Viskosität dieser Drucktinte liegt ebenfalls bei 17 bis 18 s Auslaufzeit (Ford-Becher 4).

Beispiel 4: Man verfährt wie in Beispiel 1 angegeben, verwendet jedoch 20 g des Farbstoffs der Formel

(2) 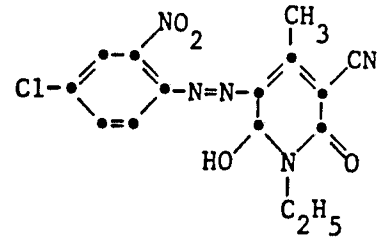

20 g des Farbstoffs der Formel

(3) 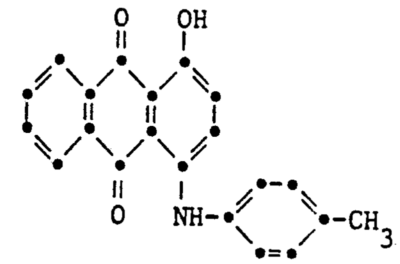

und 960 g eines Verdünners der nachfolgenden Zusammensetzungen:

(a) 823 Teile Wasser

150 Teile einer 48%-igen wässrigen Emulsion eines Acrylsäure/Styrol-Mischpolymerisats

15 Teile einer 15%-igen wässrigen Emulsion von Polyacrylsäure, vernetzt mit Divinylbenzol, MG ca. $4 \cdot 10^6$

2 Teile Ammoniak 30%-ig

10 Teile Antischaummittel (Hauptkomponente: 2-Aethylhexanol). 1000 Teile

(b) 795 Teile Wasser

150 Teile einer 48%-igen wässrigen Emulsion eines Acrylsäure/Styrol-Mischpolymerisats

15 Teile einer 15%-igen wässrigen Emulsion von Polyacrylsäure, vernetzt mit Divinylbenzol, MG ca. $4 \cdot 10^6$

30 Teile einer 3 %-igen wässrigen Natriumhydroxidlösung

10 Teile Antischaummittel (Hauptkomponente: 2-Aethylhexanol).

1000 Teile

(c) 788 Teile Wasser

180 Teile einer 40%-igen wässrigen Emulsion eines Methylmethacrylat/Aethylacrylat/Styrol-Mischpolymerisats

20 Teile einer 15%-igen wässrigen Emulsion von Polyacrylsäure, vernetzt mit Divinylbenzol, MG ca. $4 \cdot 10^6$

2 Teile Ammoniak, 30%-ig

10 Teile Antischaummittel (Hauptkomponente: 2-Aethylhexanol).

1000 Teile

(d) 760 Teile Wasser

180 Teile einer 40%-igen wässrigen Emulsion eines Methylmethacrylat/Aethylacrylat/Styrol-Mischpolymerisats

20 Teile einer 15%-igen wässrigen Emulsion von Polyacrylsäure, vernetzt mit Divinylbenzol, MG ca. $4 \cdot 10^6$

30 Teile einer 3%-igen wässrigen Natriumhydroxidlösung

10 Teile Antischaummittel (Hauptkomponente: 2-Aethylhexanol)

1000 Teile

Man erhält mit allen Drucktinten egale und farbstarke grüne Drucke mit scharfen Konturen.

**Patentansprüche**

1. Wässrige Transferdrucktinte enthaltend mindestens einen für den Transferdruck geeigneten sublimierbaren Farbstoff, mindestens ein Bindemittel, mindestens ein Verdickungsmittel und gegebenenfalls weitere Zusätze, dadurch gekennzeichnet, dass das Verdickungsmittel
Hydroxyethylcellulose
oder
Polyacrylsäure mit einem Molekulargewicht von 3 bis $10 \cdot 10^6$ und das Bindemittel
ein Polymerisat oder Mischpolymerisat aus Acrylsäure, Methacrylsäure oder deren Salzen oder $C_1$-$C_4$-Alkylestern oder
ein Acrylsäure/Methacrylsäure-Styrolmischpolymerisat oder ein Acryl-oder Methacrylsäure-$C_1$-$C_4$-alkylester-Styrolmischpolymerisat sind, wobei das Molekulargewicht des Bindemittels im Bereich von 10'000 bis 1'000'000 liegt.

2. Drucktinte gemäss Anspruch 1, dadurch gekennzeichnet, dass diese als Verdicker Polyacrylsäure mit einem Molekulargewicht von 3 bis $6 \cdot 10^6$ enthält.

3. Drucktinte gemäss Anspruch 1, dadurch gekennzeichnet, dass diese als Verdicker eine mit Divinylbenzol vernetzte Polyacrylsäure mit einem Molekulargewicht von 3 bis $5 \cdot 10^6$ enthält.

4. Drucktinte gemäss Anspruch 1, dadurch gekennzeichnet, dass diese als Verdicker Hydroxyethylcellulose mit einem Molekulargewicht von 40'000 bis 200'000 enthält.

5. Drucktinte gemäss einem der Ansprüche 1 bis 4, dadurch gekennzeichnet, dass diese als Bindemittel ein Acrylsäure-Styrolmischpolymerisat enthält.

6. Drucktinte gemäss einem der Ansprüche 1 bis 4, dadurch gekennzeichnet, dass diese als Bindemittel polymere Acrylsäure mit einem Molekulargewicht von 10'000 bis 25'000 enthält.

7. Drucktinte gemäss einem der Ansprüche 1 bis 4, dadurch gekennzeichnet, dass diese als Bindemittel ein Mischpolymerisat aus Ethylacrylat, Methylmethacrylat und Styrol enthält.

8. Drucktinte gemäss Anspruch 1, dadurch gekennzeichnet, dass diese eine Viskosität von 15 bis 20 s Auslaufzeit aufweist.

9. Drucktinte gemäss einem der Ansprüche 1 bis 8, dadurch gekennzeichnet, dass diese als weiteren Zusatz ein Antischaummittel enthält.

10. Verwendung der Drucktinte gemäss einem der Ansprüche 1 bis 9 zum Bedrucken von Transferdruckpapier auf Tiefdruckmaschinen.

**Claims**

1. An aqueous transfer printing ink containing at least one sublimable dye suitable for transfer printing, at least one binder, at least one thickener and if desired further additives, wherein the thickener is hydroxyethylcellulose or polyacrylic acid having a molecular weight of 3 to $10 \times 10^6$, and the binder is a polymer or copolymer of acrylic acid, methacrylic acid or salts thereof or of $C_1$-$C_4$-alkyl esters or is an acrylic/methacrylic acid/styrene copolymer or a $C_1$-$C_4$-alkyl acrylate or methacrylate/styrene copolymer, the molecular weight of the binder being in the range from 10,000 to 1,000,000.

2. A printing ink according to claim 1, which contains as thickener polyacrylic acid having a molecular weight of 3 to $6 \times 10^6$.

3. A printing ink according to claim 1, which contains as thickener a divinylbenzene-crosslinked polyacrylic acid having a molecular weight of 3 to $5 \times 10^6$.

4. A printing ink according to claim 1, which contains as thickener hydroxyethylcellulose having a molecular weight of 40,000 to 200,000.

5. A printing ink according to any one of claims 1 to 4, which contains as binder an acrylic acid/styrene copolymer.

6. A printing ink according to any one of claims 1 to 4, which contains as binder polymeric acrylic acid having a molecular weight of 10,000 to 25,000.

7. A printing ink according to any one of claims 1 to 4, which contains as binder a copolymer of ethyl acrylate, methylmethacrylate and styrene.

8. A printing ink according to claim 1, which has a viscosity of 15 to 20 s of efflux time.

9. A printing ink according to any one of claims 1 to 8, which contains an antifoam as further additive.

10. Use of the printing ink according to any one of claims 1 to 9 for printing transfer paper on rotogravure machines.

**Revendications**

1. Encre aqueuse pour impression par transfert, contenant au moins un colorant sublimable convenant à l'impression par transfert, au moins un liant, au moins un épaississant et éventuellement d'autres additifs, caractérisée en ce que l'épaississant est l'hydroxyéthylcellulose ou un poly(acide acrylique) ayant une masse moléculaire de 3 à $10.10^6$, et que le liant est un polymère ou un copolymère de l'acide acrylique, de l'acide methacrylique ou de leurs sels ou esters alkyliques en $C_1$-$C_4$, ou un copolymère d'acide acrylique/acide méthacrylique et de styrène, ou un copolymère d'acrylate ou de méthacrylate d'alkyle en $C_1$-$C_4$ et de styrène, la masse moléculaire du liant étant dans l'intervalle de 10 000 à 1 000 000.

2. Encre d'impression selon la revendication 1,

caractérisée en ce qu'elle contient en tant qu'épaississant un poly(acide acrylique) ayant une masse moléculaire de 3 à $6.10^6$.

3. Encre d'impression selon la revendication 1, caractérisée en ce qu'elle contient en tant qu'épaississant un poly(acide acrylique) réticulé par du divinylbenzène et ayant une masse moléculaire de 3 à $5.10^6$.

4. Encre d'impression selon la revendication 1, caractérisée en ce qu'elle contient en tant qu'épaississant de l'hydroxyéthylcellulose ayant une masse moléculaire de 40 000 à 200 000.

5. Encre d'impression selon l'une des revendications 1 à 4, caractérisée en ce qu'elle contient en tant que liant-un copolymère d'acide acrylique et de styrène.

6. Encre d'impression selon l'une des revendications 1 à 4, caractérisée en ce qu'elle contient en tant que liant un polymère de l'acide acrylique ayant une masse moléculaire de 10 000 à 25 000.

7. Encre d'impression selon l'une des revendications 1 à 4, caractérisée en ce qu'elle contient en tant que liant un copolymère d'acrylate d'éthyle, de méthacrylate de méthyle et de styrène.

8. Encre d'impression selon la revendication 1, caractérisée en ce qu'elle présente une viscosité correspondant à un temps d'écoulement de 15 à 20 secondes.

9. Encre d'impression selon l'une des revendications 1 à 8, caractérisée en ce qu'elle contient en tant qu'additif supplémentaire un agent antimoussant.

10. Utilisation de l'encre d'impression selon l'une des revendications 1 à 9 pour imprimer un papier pour impression par transfert sur des machines d'héliogravure.